**Europäisches Patentamt**

**European Patent Office**

**Office européen des brevets**

(19)

(11) Veröffentlichungsnummer: **0 139 112**

**A1**

(12) # EUROPÄISCHE PATENTANMELDUNG

(21) Anmeldenummer: **84108777.8**

(22) Anmeldetag: **25.07.84**

(51) Int. Cl.⁴: **A 22 C 13/00**

(30) Priorität: **03.08.83 DE 3328050**

(43) Veröffentlichungstag der Anmeldung:
**02.05.85 Patentblatt 85/18**

(84) Benannte Vertragsstaaten:
**AT BE CH DE FR GB IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Kastl, Erna**
**Finkenweg 5**
**D-6204 Taunusstein 2(DE)**

(72) Erfinder: **Klenk, Ludwig**
**Jungferweg 20**
**D-6227 Oestrich-Winkel III(DE)**

(72) Erfinder: **Faust, Horst**
**Lohmühlweg 17**
**D-6200 Wiesbaden(DE)**

(54) **Rauchdurchlässige Folie aus faserverstärkter regenerierter Cellulose zur Herstellung von Schlauchhüllen, insbesondere Wursthüllen.**

(57) Die rauchdurchlässige Folie aus faserverstärkter regenerierter Cellulose zeigt auf wenigstens einer ihrer beiden Oberflächen eine Schicht aus siegelfähigem Material mit einer rauchdurchlässigen Struktur, welche aus parallel zueinander sich erstreckenden linienförmigen Unterbrechungen besteht. Diese Schicht ist gegebenenfalls mit einer haftvermittelnden Schicht auf der Folienoberfläche verankert. Die Folie ist geeignet zur Herstellung von Schlauchhüllen, insbesondere Wursthüllen, mit einer längsaxialen genähten oder gesiegelten Naht.

Beschrieben wird ferner ein Verfahren zur Herstellung der Folie durch Koagulation von Viskose.

HOECHST AKTIENGESELLSCHAFT
KALLE Niederlassung der Hoechst AG

83/K 050                                23. Juli 1984
                                        WLJ-Dr.Gt-cc


Rauchdurchlässige Folie aus faserverstärkter regenerierter Cellulose zur Herstellung von Schlauchhüllen, insbesondere Wursthüllen.


Die Erfindung bezieht sich auf eine rauchdurchlässige
Folie aus faserverstärkter regenerierter Cellulose mit
einer Schicht aus einem thermoplastischen siegelfähigen
Harz, insbesondere aus einem Vinylidengruppen enthaltenden Copolymer, mit rauchdurchlässiger Struktur, wobei
diese Schicht gegebenenfalls mit einer haftvermittelnden
Schicht auf der Folienoberfläche verankert ist, geeignet
zur Herstellung von Schlauchhüllen, insbesondere Wursthüllen, mit einer längsaxialen gesiegelten oder genähten
Naht. Die Erfindung betrifft ferner ein Verfahren zur
Herstellung dieser Folie sowie eine aus dieser Folie
hergestellte Schlauchhülle, insbesondere Wursthülle, mit
einer längsaxialen gesiegelten oder genähten Naht.

Aus der EP-A-0 058 240 ist eine Schlauchhülle, insbesondere Wursthülle, bekannt geworden, die aus einer
Folienbahn der eingangs genannten Art hergestellt wird,
indem man die Folienbahn zu einem Schlauch formt und
die sich überlappenden Randbereiche miteinander verklebt.

Die Klebstoffschicht kann nach dieser Druckschrift neben
einer Vielzahl von Möglichkeiten beispielsweise auch eine
Siegelschicht aus einem thermoplastischen, Vinylidengruppen enthaltenden Polymeren sein, das mit einem
wasserunlöslichen haftvermittelnden Harz auf der Ober-

HOECHST   AKTIENGESELLSCHAF[1]
KALLE  Niederlassung der Hoechst AG

- 2 -

fläche der Folienbahn verankert ist. Da die bekannte
Schlauchhülle als spezielle Wursthülle für zu räuchernde
Brühwürste und Dauerwurstwaren verwendet werden soll,
kann sich diese Klebstoffschicht, die einen wasser- und
rauchundurchlässigen Film bildet, allerdings nur im
Bereich der Nahtzone befinden. Um diesen, wenn auch nur
im Verklebungsbereich der Folienbahn vorhandenen, Klebstoff-Film ausreichend gas- und rauchdurchlässig zu
machen, werden nach dieser Druckschrift verschiedene
Möglichkeiten angegeben. So soll die Klebstoffschicht
mit Unterbrechungen oder Ausnehmungen aufgebracht
werden, z.B. mit einer profilierten Auftragswalze,
welche der Klebstoffschicht eine Rasterstruktur verleiht. Eine weitere Möglichkeit besteht darin, den fertiggestellten Klebstoff-Film nachträglich mechanisch zu
perforieren oder ihn auf chemischem Weg partiell abzulösen. Ferner werden eine Reihe von chemischen Verfahren
angegeben, mit denen die Klebstoffschicht eine poröse
Struktur erhalten soll.

Diese bekannte Folienbahn und die daraus hergestellte
Schlauchhülle zeigen somit eine Klebstoffschicht, deren
rauchdurchlässige Struktur nur mit Hilfe relativ aufwendiger Methoden herstellbar ist. Ihre Rauchdurchlässigkeit ist außerdem häufig unterschiedlich stark ausgebildet, so daß im Nahtbereich von Wursthüllen aus
diesem Folienmaterial nach dem Räuchern eine ungleichmäßige, oft auch strukturiert erscheinende Räucherfärbung vorhanden ist. Auch kann stellenweise eine Verschlechterung der Festigkeit der Naht eintreten, so daß die Schlauchhülle beim Füllen zum Aufplatzen der Naht neigt. Ein weiterer Nachteil besteht darin, daß diese bekannten Klebstoffschichten nicht über die gesamte Oberfläche der Bahn aufgebracht werden können, da daraus eine wesentliche Reduzierung der Rauch- und Wasserdampfdurchlässigkeit der Schlauchhülle über ihre gesamte Oberfläche resultieren würde.

Es ist deshalb Aufgabe der Erfindung, eine rauch- und wasserdampf-durchlässige Folie aus faserverstärkter regenerierter Cellulose anzugeben, die über ihre gesamte Oberfläche eine völlig gleichmäßige Rauchdurchlässigkeit zeigt und die sich problemlos zu Schlauchhüllen mit einer längsaxialen Nahtzone verarbeiten läßt, wobei auch die aus der z.B. bahnförmigen Folie hergestellten Schlauchhüllen über ihre gesamte Oberfläche ausgezeichnete Rauchdurchlässigkeit aufweisen. Eine weitere wesentliche Aufgabe besteht darin, eine Folie mit einer verringerten Wasserdampfdurchlässigkeit zu schaffen, wobei ihre Durchlässigkeit für Wasser allerdings wesentlich größer ist als bei Folien, die zur Herstellung von Wursthüllen mit einer Sperrschicht für Sauerstoff, Wasser und Wasserdampf verwendet werden.

Die Aufgabe der Erfindung besteht somit darin, der Folie bzw. der Schlauchhülle Eigenschaften zu verleihen, die eigentlich zueinander im Gegensatz stehen, nämlich hohe Durchlässigkeit für Räucherrauch, wie er beim Räuchern von Würsten verwendet wird, und reduzierte Durchlässigkeit gegenüber Wasserdampf.

Eine weitere Aufgabe der Erfindung besteht darin, eine Folie aus faserverstärkter regenerierter Cellulose anzugeben, die auch zur Herstellung von Schlauchhüllen mit einer längsaxial sich erstreckenden genähten Verbindungszone besonders geeignet ist. Zur Herstellung von diesen Schlauchhüllen wird die Folie bekanntlich zunächst längsaxial gefaltet und dann an ihren längsaxialen Randzonen durch Nähen zu einem Schlauch verbunden. Die an den Einstichen durch das Hüllenmaterial hindurchtretenden Fäden üben starke Reißkräfte auf die Folie aus, so daß von der Folie eine sehr hohe Einreißfestigkeit verlangt wird, damit die daraus durch Nähen hergestellten Schlauchhüllen an den Einstichlöchern nicht zum Einreißen neigen.

Diese Aufgabe wird gelöst durch die im Anspruch 1 angegebene Folie, durch das im Anspruch 8 genannte Verfahren zu ihrer Herstellung sowie durch eine Schlauchhülle mit den im Anspruch 5 genannten Merkmalen.

Wesentlich für die Lösung des eingangs dargestellten Problems ist die besondere Struktur der Oberflächenschicht, die parallel zueinander und in Maschinenrichtung, d.h. in Längsrichtung der bahnförmig hergestellten Folie, sich erstreckende Risse im Mikrometerbereich aufweist, sowie das Merkmal, daß sie aus siegelfähigem Material besteht, welches praktisch die gesamte Oberfläche der Folie, mit Ausnahme der rißartigen Unterbrechungen, bedeckt. Die Rißstruktur befindet sich dabei nicht nur am Randbereich der Folie, der bei der Verbindung der Randzonen zur Längsnaht gesiegelt wird, sondern erstreckt sich über die gesamte Fläche der Folie. Die Maße der linienförmigen Risse sind im kennzeichnenden Teil des Anspruchs 1 angegeben. Die relativ langen Risse, d.h. mit einer Länge von größer als 300 $/$um, zeigen Abstände von 40 bis 80 $/$um, wobei im Durchschnitt die Werte um 60 $/$um liegen.

Die Folie zeigt trotz der auf ihrer gesamten Oberfläche vorhandenen Schicht aus thermoplastischem Material, welches als geschlossener Film für seine hohe Undurchlässigkeit gegenüber Rauch und Wasserdampf bekannt ist, über ihre gesamte Oberfläche eine ausgezeichnete gleichmäßige Durchlässigkeit gegenüber Rauch, wie er beim Räuchern von Würsten verwendet wird, ebenso wie eine höhere Wasserdampfdurchlässigkeit, gleichzeitig aber auch eine hohe mechanische Festigkeit der Siegelnaht, wenn aus der Folie durch längsaxiales Falten und Versiegeln der Seitenränder zu einer Siegelnaht eine Schlauchhülle hergestellt wird und diese mechanisch und thermisch belastet wird.

Die Wasserdampfdurchlässigkeit beträgt bei der einseitig mit der erfindungsgemäßen Oberflächenschicht versehenen Folie 200 bis 700, vorzugsweise 350 bis 500 g/m$^2$.d und 100 bis 600, vorzugsweise 200 bis 300 g/m$^2$.d für die doppelseitig beschichtete Folie, gemessen nach gravimetrischem Verfahren bei 23 $\pm$ 1°C und 85 $\pm$ 2 % rel. Feuchte (DIN 53 122). Damit liegt die Durchlässigkeit gegenüber Wasserdampf bei wesentlich höheren Werten als bei einer Folie aus dem gleichen Basisfilm und einem geschlossenen Film aus thermoplastischem Harz auf dessen Oberfläche. Insbesondere wenn das Harz ein Vinylidengruppen enthaltendes Copolymeres ist, können dann bekanntlich Werte von nur 0,5 bis 2 $g/m^2$.d erreicht werden. Die Rauchdurchlässigkeit der Folie zeigt sich in einer völlig gleichmäßigen Färbung von Wurstbrät im typischen rötlich-braunen Farbton, wenn man Würste aus Schlauchhüllen der Erfindung einem üblichen Räucherprozess unterwirft.

Die Festigkeit der Siegelnaht von Schlauchhüllen, die aus der Folie der Erfindung hergestellt sind, ist - trotz der rissigen Struktur der siegelfähigen Oberflächenschicht - größer als die mechanische Festigkeit des Trägermaterials aus faserverstärkter regenerierter Cellulose. Besonders bei der Herstellung von Würsten, bei der die Naht beim Brühen bzw. Räuchern der Wurst längere Zeit heißem Wasser oder Rauchgasen ausgesetzt ist, sowie beim Füllen, Abdrehen, Abbinden, Klippen und dergleichen, wenn die Naht hoher mechanischer Belastung und Spannungen standhalten muß und Dimensionsänderungen eintreten, ist die hohe Festigkeit der Siegelnaht von großer Bedeutung. Die Folie ist aber auch hervorragend geeignet zur Herstellung von Schlauchhüllen mit einer genähten Längsnaht, denn sie zeigt im Bereich der Einstiche eine wesentlich verringerte Neigung zum Einreißen.

Alle diese vorteilhaften Eigenschaften machen die Folie

HOECHST AKTIENGESELLSCHAFT
KALLE Niederlassung der Hoechst AG

- 7 -

besonders geeignet zur Herstellung von Wursthüllen für räucherbare Brühwürste und Dauerwürste.

Das eigentliche Trägermaterial der Folie besteht aus faserverstärkter Cellulose (Zellglas, regenerierte Cellulose, Cellulosehydrat), die als faserverstärkte Cellulosebahn nach dem Viskoseverfahren (EP-A-0 058 240) hergestellt wurde.

Die Faserverstärkung ist insbesondere bahnförmig, z.B. eine Papierbahn, und besteht gewöhnlich aus Fasern wie sie bei der Herstellung von Papier oder Reispapier verwendet werden, oder aus nativen Fasern wie Hanf- oder Flachsfasern, oder synthetischen Fasern wie Polyamid-, Polyester- oder Polyacrylnitril-Fasern.

Die Faserbahn wird vorzugsweise beidseitig mit einer Viskoselösung behandelt, insbesondere in eine Viskoselösung getaucht oder mit einer Viskoselösung beschichtet, z.B. mit schlitzförmigen Düsen, Walzen oder durch Sprühvorrichtungen, und anschließend in regenerierte Cellulose übergeführt.

Es ist auch möglich, in die Viskose 10 bis 80 Gew.-% Verstärkungsfasern einzuarbeiten, die zweckmäßigerweise eine mittlere Faserlänge von 0,05 bis 15 mm aufweisen. Die Fasern bestehen aus organischen Kunstfasern, aus Naturfasern, z.B. Baumwollfasern, oder aus Fibriden. Die Fasern enthaltende Viskose wird dann durch eine Düse in das Koagulationsbad ausgepreßt unter Bildung einer Gelbahn.

HOECHST  AKTIENGESELLSCHAFT
KALLE  Niederlassung der Hoechst AG

- 8 -

Die Viskoselösung ist eine alkalische Lösung von Natrium-Cellulosexanthogenat und wird üblicherweise hergestellt durch Umsetzung der aus Cellulose mit Natriumhydroxidlösung erhaltenen Alkalicellulose mit Schwefelkohlenstoff im alkalischen Medium; sie enthält meist 4 bis 20 Gew.-% Cellulose. Nach der Reifung wird die Viskose auf die Faserbahn aufgebracht und versponnen, d.h. koaguliert. Das Spinnbad enthält beispielsweise 20 bis 80 g/l Schwefelsäure, ferner 80 bis 150 g/l Natriumsulfat und/oder 150 bis 300 g/l Ammoniumsulfat.

In weiteren Stufen wird das aus koagulierter Viskose bestehende faserverstärkte bahnförmige Produkt in saurem Medium, z.B. in verdünnter (kleiner/gleich 5 Gew.-%) Schwefelsäure, zu Cellulosehydrat-Gel regeneriert, zur Entfernung von Säure und Salzen mit Wasser gewaschen, mit z.B. Natriumsulfitlösung entschwefelt, gegebenenfalls durch ein Bleichbad und schließlich durch ein Weichmacherbad mit z.B. wäßriger 5 bis 20%iger Glycerin-Sorbit- oder Glucoselösung geführt.

Bevor die faserverstärkte Folie aus Cellulosehydrat-Gel abschließend durch intensive Trocknung bei 90 bis 140°C in regenerierte Cellulose übergeführt und gegebenenfalls durch Konditionierung auf einen Wassergehalt von etwa 5 bis 15 Gew.-% eingestellt wird, wird die Bahn - nachdem sie gegebenenfalls mit einer einen Haftvermittler enthaltenden Flüssigkeit behandelt wurde - in einer nachfolgenden Stufe teilentwässert und danach mit dem die siegelfähige Schicht ausbildenden Mittel beaufschlagt. Die faserverstärkte Folie zeigt nach der abschließenden Trocknung eine Dicke von 50 bis 200 /um entsprechend einem Flächengewicht von 50 bis 250 g/m².

Eine besonders vorteilhafte Folie wird erhalten, wenn man, wie in EP-A-0 058 240 beschrieben, die Faserbahn während die Viskose koaguliert wird, gegebenenfalls aber auch während der Beschichtung mit Viskose, beim Regenerieren, beim Beschichten mit Haftvermittler und/oder beim Beschichten mit siegelfähigem Material, an den Rändern festhält, so daß ein Schrumpfen der Bahn verhindert wird.

Ein wesentlicher Verfahrensschritt besteht darin, daß man die Bahn aus dem Cellulosehydrat-Gel während der Teilentwässerung vor dem Beschichten mit siegelfähigem Material schrumpfen läßt und während des abschließenden Trockenprozesses dagegen zusätzlich in Querrichtung um etwa 1 bis 15, insbesondere 3 bis 12 % streckt, bezogen auf die ursprüngliche Breite der Faserbahn, wodurch der während der Teilentwässerung eingetretene geringe Schrumpf der Bahn in Querrichtung zumindest ausgeglichen wird. Vor diesem Strecken beim abschließenden Trockenprozeß und nach dem Beschichten mit dem siegelfähigen Material wird gegebenenfalls eine Vortrocknung durchgeführt, bei der die Hauptmenge an Wasser entfernt wird, bis die Gel-Bahn einen Wassergehalt von etwa 80 bis 150 Gew.-% aufweist. Auch dieser Verfahrenschritt wird in der EP-A-0 058 240 beschrieben.

Die infolge der schrumpfverhindernden Maßnahmen, insbesondere während der Koagulation, und der Querverstreckung während des abschließenden Trockenprozesses erreichten Festigkeitswerte der Bahn in Längs- und Querrichtung sind wesentlich für die Herstellung der Schlauchhülle mit einer Längsnaht und für den aus dem gleichen Material bestehenden Folienstreifen zur Verbindung der Randzonen der Bahn. Die erzielbaren Werte für die Reißfestigkeit und Reißdehnung sind in der EP-A-0 058 240 angegeben, wobei diese Werte allerdings in Querrichtung zur Folienbahn auch kleiner sein können als in Längsrichtung zur Folienbahn.

Es ist für das Verfahren erfindungswesentlich, unmittelbar vor dem Beaufschlagen der faserverstärkten Folienbahn aus bereits regenerierter, aber noch nicht getrockneter Cellulose, d..h. aus Cellulosehydrat-Gel, mit dem die siegelfähige Schicht ausbildenden Mittel, den Wassergehalt dieser Folienbahn, der bekanntlich relativ hoch ist und gewöhnlich 240 bis 300 Gew.-%, bezogen auf die Cellulose, beträgt, auf Werte von 130 bis 200, insbesondere 140 bis 180 Gew.-% zu reduzieren. Während dieser als Teilentwässerung bezeichneten Zwischenstufe läßt man einen Schrumpf der Folienbahn quer zur Maschinenrichtung zu, indem man die Folienbahn während dieses Vortrocknens nicht an den Rändern festhält. Die für diese Teilentwässerung erforderliche Wärme wird mit an sich bekannten Mitteln der Folienbahn zugeführt, z.B. mit Heißluft oder Heizstrahlern.

HOECHST AKTIENGESELLSCHAFT
KALLE Niederlassung der Hoechst AG

- 11 -

Ein weiteres wesentliches Merkmal des Verfahrens besteht darin, zum anschließenden Beaufschlagen der teilentwässerten faserverstärkten Folienbahn aus Cellulosehydrat-Gel mit dem die siegelfähige Schicht ausbildenden Mittel eine hochkonzentrierte wäßrige Dispersion zu verwenden, deren Feststoffgehalt mindestens 45, vorzugsweise 45 bis 65, insbesondere 50 bis 60 Gew.-% beträgt. Das einseitige Beschichten der Folienbahn mit der Dispersion erfolgt beispielsweise mit einer Drahtrakel (wire bar). Es kann aber auch jede andere dosierende Beschichtungsvorrichtung verwendet werden, die sich zum kontinuierlichen Beschichten bewegter Bahnen eignet und die eine nur kurze Kontaktzeit (0,1 bis 2 s) zwischen Dispersionsvorrat und Folienbahn gestattet. Für den beidseitigen Antrag kann nach dem Tauchverfahren mit sehr kurzer Eintauchzeit (0,1 bis 2 s), mit einem Walzenantragssystem oder mit einem Walzenantragssystem in Kombination mit einer Drahtrakel gearbeitet werden. Das Beschichtungsgewicht beträgt je Oberfläche 3 bis 15, insbesondere 8 bis 11 g/m$^2$.

Wie sich gezeigt hat, bilden sich relativ breite Risse in der siegelfähigen Oberflächenschicht, wenn man in dieser Zwischenstufe den Wassergehalt der Folie aus Cellulosehydrat-Gel auf Werte unter 130 Gew.-% reduziert oder die angegebene Mindestkonzentration der das siegelfähige Harz enthaltenden Flüssigkeit unterschreitet. Beim Unterschreiten dieser Werte wird die Rauchdurchlässigkeit der Folie nicht wesentlich verbessert, jedoch erhält man eine Folie mit zu hoher Durchlässigkeit gegenüber Wasserdampf, wobei nachteiligerweise Werte von größer als 700 g/m$^2$.d erreicht werden.

Andererseits wird die erwünschte Rauchdurchlässigkeit dann nicht erhalten, wenn man den Wassergehalt der Folie aus Cellulosehydrat-Gel auf einen Wert von größer als 200 Gew.-% reduziert. Wesentlich für den angestrebten Erfolg ist auch das Schrumpfen der Folie in Querrichtung während der Teilentwässerung, wobei das Ausmaß gering sein kann und von der abgegebenen Wassermenge abhängt.

Unter Haftvermittler in bezug auf Klebstoffe sind bekanntlich Stoffe oder Stoffgemische zu verstehen, die vor dem Klebstoffauftrag auf eine oder beide Klebflächen aufgebracht werden, um die Haftung zwischen Klebstoff und Klebflächen zu verbessern. Falls erforderlich, soll er im vorliegenden Fall die siegelfähige Oberflächenschicht auf der Folie bzw. auf dem Folienstreifen naßfest verankern. Er wird insbesondere eingesetzt, wenn eine hohe mechanische Festigkeit der Siegelnaht erreicht werden soll. Er befindet sich zwischen der Siegelschicht und der Folie und falls erforderlich zwischen der Siegelschicht und dem Folienstreifen. Er ist vorzugsweise ein wasserunlösliches, gehärtetes, kationisches Harz. Polyurethanharze, Nitrocellulose und andere als wasserunlösliche Verankerungsmittel bekannte Verbindungen können ebenfalls eingesetzt werden.

Obwohl die haftvermittelnde Harzschicht im Prinzip nur im Bereich der zu versiegelnden Flächen der Folienbahn vorhanden sein müßte, ist es aus technischen Gründen zweckmäßig, eine Oberfläche, für bestimmte Anwendungen oder überlappende Klebungen auch beide Oberflächen der Folie vollflächig mit einer oder zwei verschiedenen haftvermittelnden Harzschichten zu versehen, sofern diese ausreichend rauchdurchlässig sind.

Die den Haftvermittler enthaltende Dispersion wird bei der Herstellung der faserverstärkten Folie aus Cellulosehydrat auf die bereits regenerierte, aber noch nicht getrocknete Bahn aus Cellulosehydrat-Gel aufgebracht. Dieser Auftrag kann vor, gleichzeitig oder nach der Behandlung der Gelbahn mit einem Weichmacher, wie z.B. einem Polyol, vorgenommen werden. Die faserverstärkte Folie aus Cellulosehydrat-Gel wird hierzu vor dem Beschichten mit dem siegelfähigen Material mit einer wäßrigen Lösung überzogen, die bis zu 25 Gew.-% eines dispergierbaren Haftvermittlers, insbesondere eines wärmehärtbaren kationischen Harzes enthält. Durch die anschließenden Trockenstufen wird das Harz zu seiner wasserunlöslichen Form gehärtet und geht eine dauerhafte Bindung mit der Oberfläche der Folie ein.

Die haftvermittelnde Harzschicht hat ein Flächengewicht von etwa 30 bis 300 mg/m$^2$, vorzugsweise 40 bis 75 mg/m$^2$.

Beispiele für das kationische hitzehärtbare Harz sowie geeignete Lösungsmittel und eventuelle Zusätze sind in der EP-A-0 058 240 angegeben.

- 14 -

Besonders bevorzugte kationische hitzehärtbare Harze
sind Kondensationsprodukte von Polyamidpolyamin oder
aliphatischen Polyaminen oder von Polyamiden mit bifunktionellen Halohydrinen oder deren Derivaten, die ebenfalls in der EP-A-0 058 240 als Material für die Verankerungsschicht ausführlich beschrieben sind.

Die Permeationseigenschaften der Folie werden durch die
Verankerungsschicht praktisch nicht beeinflußt. Diese
Eigenschaft ist von besonderer Bedeutung für die Durchlässigkeit gegenüber Wasserdampf und Räucherrauch, da
die Folie zur Herstellung von Wursthüllen für geräucherte Dauerwurstwaren oder geräucherte Brühwürste verwendet wird. Bei zu geringer Durchlässigkeit würde sich
z.B. der typische rötlich-braune Farbton des geräucherten Wurstbräts nicht einstellen.

Nach dem Aufbringen der Dispersion des Haftvermittlers
erfolgt die oben beschriebene Reduzierung des Wassergehaltes der Folie aus Cellulosehydrat-Gel auf einen
Wassergehalt von 130 bis 200 Gew.-%, bezogen auf die
Cellulose. Bei dieser Teilentwässerung wird unter Wärmeeinwirkung das kationische Harz teilweise vorgehärtet.
Anschließend wird die hochkonzentrierte Flüssigkeit des
siegelfähigen Mittels auf die Folie aufgebracht und das
Dispergier- bzw. Lösungsmittel für das siegelfähige
Material in der abschließenden Trockenstufe entfernt,
wobei die Folie gewöhnlich bis zu einem Feuchtigkeitsgehalt von weniger als 15 Gew.-%, vorzugsweise 5 bis
10 Gew.-%, getrocknet wird. Eine Überzugsdicke der siegelfähigen Schicht im Bereich von etwa 0,005 bis 0,05 mm ist im allgemeinen ausreichend, die bevorzugte Dicke ist etwa 5 bis 25, insbesondere etwa 5 bis 15 /um.

Ebenso wie die Beschichtung der Folie mit dem haftvermittelnden Harz erfolgt der Auftrag der siegelfähigen Oberflächenschicht über die gesamte Fläche der Folie und nicht nur im gewünschten Verklebungsbereich. Die Folie zeigt auf einer oder auf beiden Oberflächen den vollflächig aufgebrachten Heißsiegelklebstoff, d.h. einen Klebstoff, der bei der Versiegelung thermisch aktiviert wird. Er wird in Form einer Lösung, Dispersion oder Emulsion in Wasser auf mindestens eine der beiden Oberflächen der Folie während ihrer Herstellung aus Viskose aufgebracht. Die abgebundene, lösungsmittelfreie Schicht soll nicht klebrig sein, sondern erst durch Wärmezufuhr während der Siegelung aufschmelzen und sich beim Abkühlen wieder verfestigen.

Als Rohstoff werden Copolymere des Vinylchlorids oder des Vinylidenchlorids in wäßriger Dispersion unter Zusatz von Harzen und anderen Polymeren benutzt. Daneben werden Copolymere des Vinylacetats sowie Polymethacrylsäureester, Polyurethane und Polyester, insbesondere Äthylen-Vinylacetat-Copolymere, Vinylacetat-Vinylchlorid-Copolymere, Polyamide und Polyäthylen, angewendet.

Als siegelfähiges thermoplastisches Material wird insbesondere ein Vinylidenharz, das mit einem Flächengewicht von gewöhnlich 3 bis 15 g/m$^2$ vorhanden ist, eingesetzt.

HOECHST AKTIENGESELLSCHAFT
KALLE Niederlassung der Hoechst AG

- 16 -

Diese gewöhnlich wasserdampf- und rauchundurchlässige, geschlossene Filme bildenden Harze erhalten durch das Verfahren der Erfindung eine spezielle rauchdurchlässige Struktur. Geeignete Harze werden durch Mischpolymerisation von Monomeren erhalten, wobei wenigstens eine Komponente eine Vinylidengruppe enthält.

Im allgemeinen können Vinylidenharze verwendet werden, die im polymerisierten Molekül wenigstens 5 Gew.-%, vorzugsweise aber mindestens 80 Gew.-% Vinylidenchlorid enthalten. Als Comonomere seien genannt: Vinylchlorid, Vinylbromid, Vinylacetat, Vinylpropionat, Vinylchloracetat, Alkylacrylat oder Methacrylat, wie beispielsweise Methyl-, Äthyl-, Propyl-, Butyl-, Isobutyl-, Methoxyäthyl- oder Chloräthylacrylat oder -methacrylat, Methylvinylketon, Methylisopropenylketon, Acrylnitril, Methacrylnitril, Styrol, Vinylnaphthalin, Äthylvinyläther, Butylvinyläther, N-Vinylphthalimid, N-Vinylsuccinimid, N-Vinylcarbazol, Methylen-diäthylmalonat, ungesättigte organische Säuren, wie Itaconsäure oder Mischungen von diesen Verbindungen. Das Copolymerisat kann neben Vinylidenchlorid eins bis drei dieser Monomeren enthalten.

Diese Stoffe können übliche Wachse, z.B. auf Basis von veresterten Montansäuren, Polyolefinwachse oder auf Basis von Oxazolin, und/oder übliche Füllstoffe, beispielsweise Kaolin, insbesondere hydrophobiertes Kaolin, Kieselsäure oder Calciumcarbonat (Kreide) mit einer bevorzugten mittleren Korngröße von 1 bis 3 /um enthalten.

Ferner können übliche Zusätze an Weichmachern, z.B.
Ester der Phthalsäure, wie Dibutylphthalat, Ester der
Citronensäure, wie Acetyltributylcitrat, der Sebacinsäure oder Weinsäure, wie Diisobutyltartrat, verwendet
werden.

Es hat sich gezeigt, daß die erfindungsgemäß aufgetragene siegelfähige Oberflächenschicht eine ausreichende
Rauchdurchlässigkeit gewährleistet. Mit Wurstbrät gefüllte Schlauchhüllen aus der faserverstärkten Celluloseregenerat-Folie der Erfindung zeigen nach dem Räuchern
im Bereich der Siegelnaht eine vollständige und gleichmäßige Räucherfarbe. Besondere Maßnahmen zur Verbesserung der Rauchdurchlässigkeit sind deshalb nicht erforderlich. Wie man überraschenderweise feststellen kann,
sind die beschriebenen Ausführungsformen der Schlauchhülle mit guter Rauchdurchlässigkeit im Verklebungsbereich ausreichend stabil und mechanisch und thermisch
belastbar.

Die Bildung einer Schlauchhülle mit einer oder mehreren
längsaxial sich erstreckenden Nähten, z.B. durch Verklebung der Randbereiche der längsaxial sich erstreckenden Randzonen einer Folienbahn, ist an sich bekannt, wozu
auf die eingangs genannte EP-A-0 058 240 verwiesen wird.

Die Schlauchhülle entsprechend der vorliegenden Erfindung wird aus der um ihre Längsachse gebogenen, blatt-
oder bahnförmigen rechteckigen oder endlosen Folie durch
Überlappung und Verbinden der längsaxial sich erstreckenden Randbereiche hergestellt. Sie zeigt dann eine längsaxial sich erstreckende genähte oder gesiegelte Naht. Es
ist auch möglich, die Randzonen in der Weise miteinander
zu verbinden, daß die Ränder bündig, d.h. mit den Kanten
zumindest im wesentlichen aneinanderstoßend, einander
genähert werden und dann mit einem Band, Film- bzw.
Folienstreifen, in der Anmeldung allgemein als Folienstreifen bezeichnet, der beide Randzonen überdeckt, miteinander durch Siegelung verbunden werden. Der Folienstreifen befindet sich dann auf der Außenseite oder
Innenseite der Schlauchhülle, oder es werden parallel
zueinander verlaufende Folienstreifen verwendet, von
denen sich dann einer auf der Innenseite und einer auf
der Außenseite der Schlauchhülle befindet. Ein Folienstreifen kann auch verwendet werden, wenn die Randzonen
sich überlappen. Die siegelfähige Schicht befindet sich
vor der Herstellung der Verbindungsnaht vollflächig auf
der Bahn, vorzugsweise auch auf der Oberfläche des Folienstreifens.

Wird die Nahtzone durch den Folienstreifen überdeckt, so
befindet sich die siegelfähige Schicht zumindest auf der
dem Folienstreifen zugewandten Folienoberfläche, während
die andere Folienoberfläche keine siegelfähige Schicht
benötigt und deshalb gewöhnlich unbeschichtet ist, eine
Beschichtung aus dem Haftvermittler aufweist und/oder
eine Beschichtung aus einem völlig anderen Material
zeigt, das beispielsweise die Schälbarkeit der als
Wursthülle verwendeten Schlauchhülle verbessert. Wird
hingegen eine Überlappungsnaht gebildet, bei der sich Außen- und Innenseite der Folie überdecken (vgl. Fig. 1 der EP-A-0 037 543), so wird vorzugsweise eine beidseitig mit siegelfähiger Schicht versehene Folie verwendet, so daß dann Siegelschicht gegen Siegelschicht gesiegelt werden. Für manche Anwendungen ist es aber ausreichend, wenn sich auf einer Oberfläche der Folie die mit Haftvermittler verankerte siegelfähige Schicht und auf der anderen Oberfläche der Folie nur die Haftvermittler enthaltende Schicht befindet, so daß dann zur Bildung der Überlappungsnaht Siegelschicht gegen Haftvermittler-Schicht gesiegelt werden.

Der Folienstreifen hat zweckmäßigerweise eine Breite von 5 bis 15% des Schlauchumfangs und besteht vorzugsweise aus dem gleichen Material wie die Schlauchhülle, d.h. aus rauchdurchlässigem faserverstärktem Cellulosehydrat, wobei dessen Festigkeitswerte in Längs- und Querrichtung im gleichen Bereich liegen.

Dieser kompakte Folienstreifen besteht aus rauchdurchlässigem Material und erfordert deshalb keine zusätzlichen Maßnahmen zur Herstellung einer rauchdurchlässigen Struktur, z.B. in Form von Poren oder Lochungen.

Da die Schlauchhülle als Verpackungshülle für zu räuchernde Nahrungsmittel verwendet werden soll, ist allerdings eine ausreichende Rauchdurchlässigkeit der siegelfähigen Oberflächenschicht auch auf dem Folienstreifen vorzusehen, wobei die bereits oben ausgeführten Maßnahmen erforderlich sind.

Die Formung der bahnförmigen Folie zu einem Schlauch erfolgt beispielsweise entweder auf einer genügend langen Wegstrecke, so daß keine Verzerrungen und Faltenbildung erfolgt, oder durch Umlenkung über ein schulterartiges Formwerkzeug (EP-A-0 058 240). Die beiden Seitenkanten der Bahn grenzen im wesentlichen abstandslos aneinander oder überlappen sich. Mittels am Schlauchumfang angreifender Transportelemente wird der Schlauch über die Oberfläche eines im Schlauchinneren angeordneten Stützkörpers bewegt. Der Folienstreifen wird vor dem Nahtschluß vorzugsweise mit seiner in Richtung zur inneren Oberfläche des Schlauches weisenden siegelfähigen Oberflächenschicht so zwischen die Oberfläche des Stützkörpers und den aneinanderstoßenden Rändern der Folienbahn eingeführt, daß die durch die Ränder der Folienbahn gebildete Stoßnaht die Mittellinie des Folienstreifens bildet, wobei der Folienstreifen beide Randzonen im wesentlichen gleich breit überdeckt. Bahnbewegung und Versiegelung bzw. Vernähen der Randzonen können taktweise oder kontinuierlich erfolgen.

Die Versiegelung erfolgt z.B. durch Kontakt mit einer auf eine bestimmte Temperatur vorgeheizten Siegelbacke oder -rolle. Für die Versiegelung kann jedoch jede andere Wärmequelle in Frage kommen, wie beispielsweise IR-Strahler, Hochfrequenz-Erwärmung oder Heißluft.

Häufig ist es zweckmäßig, zusätzlich Druck auf die Siegelstelle auszuüben, z.B. durch Anpressen einer geheizten Rolle. Die angewandten Siegeltemperaturen und Drucke

HOECHST AKTIENGESELLSCHAFT
KALLE Niederlassung der Hoechst AG

- 21 -

hängen weitgehend von den Stoffeigenschaften der Siegelschichten ab. In der Praxis wird man gewöhnlich Siegelschichten bevorzugen, die im Temperaturbereich von 120 bis 150°C Verbindungsnähte ergeben, die den Beanspruchungen in der Praxis standhalten.

Wird ein Folienstreifen zur Verbindung der Randbereiche der längsaxial sich erstreckenden Randzonen der Bahn verwendet, so wird der Folienstreifen zum Versiegeln der Randzonen mit der Klebstoffschicht auf die Randzonen aufgedrückt. In einer weiteren Variante besteht der Folienstreifen selbst aus zur Versiegelung geeignetem Material, d.h. aus siegelfähigem, thermoplastischem Material, so daß sich der Auftrag einer siegelfähigen Oberflächenschicht auf den Folienstreifen erübrigt.

Es ist auch möglich einen rauchdurchlässigen Folien-streifen, insbesondere aus faserverstärktem Cellulose-hydrat, mit beidseitiger siegelfähiger Oberflächen-schicht zu verwenden. Dieser Folienstreifen wird mit einer seiner beiden siegelfähigen Oberflächen auf eine der beiden längsaxial sich erstreckenden Randzonen der Folie in längsaxialer Richtung ganzflächig aufgesiegelt. Danach wird der Schlauch unter Überlappung der beiden längsaxial sich erstreckenden Randzonen der Bahn geformt, wobei sich der Folienstreifen in der Überlappung zwischen den Randzonen befindet. Nun wird die zweite siegelfähige Oberfläche des Folienstreifens mit der zweiten Randzone der Folie versiegelt.

Zur Verpackung von Fleischwaren in Form von Wurstmasse werden bekanntlich geraffte, Schlauchhüllen verwendet, die beim Einpressen der Wurstmasse fortlaufend entfältelt werden. Diese gerafften Hüllen werden bisher aus langen Schläuchen hergestellt, die man in Richtung ihrer Längsachse fördert und gegen eine Gegenkraft rafft, wobei die Länge der gerafften Hülle gewöhnlich nur noch 1 bis 3% der Ursprungslänge beträgt.

Auch die erfindungsgemäße Schlauchhülle kann gerafft werden. Sie wird beispielsweise mit dem aus der US-A-3,988,804 bekannten Vorrichtung gerafft. Ein Raffverhältnis von 1:70 bis 1:80 läßt sich ohne weiteres erreichen.

Es ist auch eine spiralförmige Verdrehung der Hülle und folglich eine Verdrillung der relativ dicken Nahtzone um die Längsachse der Hülle beim Raffvorgang möglich, aber nicht erforderlich. Dies geschieht beispielsweise mit an sich bekannten Raffvorrichtungen, wie sie z.B. in der US-A-2,819,488, US-A-3,619,854, US-A-3,594,857 und US-A-3,766,603 beschrieben sind.

Sofern die Schlauchhülle z.B. für empfindliche Nahrungsmittel vorgesehen ist, so wird die Bahn oder die Schlauchhülle sterilisiert, wobei man übliche Methoden anwendet.

Bei der Verwendung als Wursthülle tritt keine Geschmacksbeeinflussung der Wurstmasse ein. Die Wursthülle und Siegelnaht zeigen große Festigkeit gegenüber Dehnungsbelastung und Volumenbeständigkeit beim Füllen mit Wurstmasse, Hantieren und Verarbeiten. Durch den beim Füllen auftretenden Druck und durch die beim Brühen und Abkühlen auftretenden Quell- und Schrumpfkräfte tritt überraschenderweise keine Schädigung der Naht ein, obwohl die Siegelschicht unterbrochen ausgebildet ist. Die Wursthülle ist auch bei tiefen Temperaturen lagerfähig und läßt sich gut aufschneiden, wobei der Folienstreifen als Aufreißband dienen kann. Die gegenüber unbeschichteten Folien aus faserverstärkter regenerierter Cellulose reduzierte Wasserdampfdurchlässigkeit der erfindungsgemäßen Schlauchhüllen hat zur Folge, daß Brühwürste mit einer Wursthülle aus diesem Folienmaterial nach einer Lagerzeit von einer Woche einen um etwa 30 bis 40 % geringeren Wasserverlust zeigen.

Die Erfindung wird durch das folgende Beispiel näher erläutert:

Beispiel

Die Herstellung der Folie erfolgt wie in Fig. 1 der EP-A-0 058 240 gezeigt, wobei allerdings zwischen den Bädern (8) und dem Trockenteil (10) die erfindungswesentlichen Verfahrensschritte durchgeführt werden. Eine Bahn aus langfaserigem Hanfpapier mit einer Flachbreite von 235 mm und einem Flächengewicht von 21 $g/m^2$ wird beidseitig mit Viskose beschichtet. Die Spaltbreite beträgt beispielsweise 0,8 mm, die Bahngeschwindigkeit 5 m/Min. Danach wird auf die mit Viskose versehene Bahn

- 24 -

zur Fällung, d.h. Koagulation, und Regenerierung Regenerierflüssigkeit aufgebracht. Die Bahnbreite wird durch die an den beiden Bahnkanten angreifenden Nadelketten konstant gehalten, so daß die gewöhnlich beim Koagulieren und Regenerieren auftretende Schrumpfung in Querrichtung verhindert wird. Die faserverstärkte Folienbahn aus Cellulosehydrat-Gel durchläuft anschließend Wasch-, Entschwefelungs- und Weichmachungsbäder. Das letzte Bad, das die Folie aus Cellulosehydrat-Gel durchläuft, enthält eine 1 gew.-%ige wäßrige Lösung eines Haftvermittlers auf Basis eines kationischen Harzes, welches ein Reaktionsprodukt von Ethylendiamin, Adipinsäure, Diethylentriamin und Epichlorhydrin ist ( ®Resamin HW 601, Hersteller Cassella). Die Folie wird mit dieser Lösung beidseitig beschichtet. Nach Verlassen dieses Bades hat die Folie aus Cellulosehydrat-Gel eine Breite von 210 mm und einen Wassergehalt von 250 Gew.-%.

Bei der nun folgenden Teilentwässerung der Folienbahn, bei der sie über geheizte Walzen mit einer Oberflächentemperatur von 70 bis 80°C geführt wird, schrumpft die Folie auf eine Breite von 208 mm und ihr Wassergehalt wird auf 160 Gew.-% reduziert. Nach dieser Zwischenstufe wird die Folienbahn einer Beschichtungsvorrichtung zugeführt, wie sie in der DE-C-26 11 625 beschrieben ist. Als Dosierrakel wird eine Drahtrakel mit einer Drahtstärke von 150 /um verwendet. Die aufgebrachte Schicht hat eine Naßfilmdicke von etwa 16 /um.

Als Beschichtungsmittel wird eine wäßrige Polymerdisper-

HOECHST AKTIENGESELLSCHAFT
KALLE Niederlassung der Hoechst AG

- 25 -

sion eines carboxylgruppenhaltigen Copolymerisats aus überwiegend Vinylidenchlorid-Einheiten und geringen Anteilen von Acrylnitril-Einheiten und anderen polymerisierbaren Verbindungen mit einem Feststoffgehalt von 55 % verwendet (®Diofan 208 D, Hersteller BASF).

Die in der Fig. 1 der EP-A-0 058 240 gezeigte Vortrocknung im ersten Trockenteil (10) entfällt. Die mit der Copolymerisat-Dispersion beschichtete Folienbahn wird an ihren Kanten von Nadelkluppenketten erfaßt und in einem Spannrahmen durch mehrere Etagen eines Trockenfeldes geführt. Im Spannrahmeneinlauf wird die Folie auf eine Breite von 218 bis 220 mm in Querrichtung verdehnt und danach - während sie weiterhin auf diese Breite gehalten wird - getrocknet, vorzugsweise bei etwa 130°C. Die Restfeuchte der Folie beträgt etwa 7 Gew.-%, sie zeigt eine Reißfestigkeit in Längsrichtung von 74 $N/mm^2$, in Querrichtung 64 $N/mm^2$ und eine Reißdehnung von etwa 9 % in Längs- und 24 % in Querrichtung (DIN 53 455).

Die nach diesem Beispiel hergestellte PVDC-Schicht hat eine Dicke von 7-9 μm, was einem Flächengewicht von etwa 10 $g/m^2$ entspricht. Sie ist nicht geschlossen, sondern weist parallele, linienförmige Risse in Maschinenrichtung auf, die eine Länge im Bereich von 15 bis 500 μm, eine Breite im Bereich von 8 bis 12 μm und einen gegenseitigen durchschnittlichen Abstand von etwa 60 μm zeigen. Zur Messung des Abstands werden nur die relativ langen Risse, d.h. größer als etwa 300 μm, berücksichtigt.

HOECHST AKTIENGESELLSCHAFT
KALLE Niederlassung der Hoechst AG

- 26 -

Aus der mit der Verankerungsschicht und Siegelschicht versehenen Folie wird nun ein Schlauch geformt, wie es beispielsweise in Fig. 3, 4 oder 7 der EP-A-0 058 240 beschrieben ist.

Es ist auch möglich, die Schlauchbildung in einem Arbeitsgang mit der Herstellung der Würste durchzuführen, indem man die Folie am Füllrohr einer Stopfvorrichtung in eine Schlauchhülle überführt und in diese gleichzeitig Wurstmasse einpreßt.

--------------------

PATENTANSPRÜCHE

1. Rauchdurchlässige Folie aus faserverstärkter regenerierter Cellulose mit einer Schicht aus einem thermoplastischen siegelfähigen Harz, insbesondere aus einem Vinylidengruppen enthaltenden Copolymer, mit rauchdurchlässiger Struktur, wobei diese Schicht gegebenenfalls mit einer haftvermittelnden Schicht mit der Folienoberfläche verankert ist, geeignet zur Herstellung von Schlauchhüllen, insbesondere Wursthüllen, mit einer längsaxialen genähten oder gesiegelten Naht, dadurch gekennzeichnet, daß die Folie auf wenigstens einer ihrer beiden Oberflächen eine auf dieser gesamten Oberfläche vorhandene Schicht mit einer rauchdurchlässigen Struktur aufweist, welche aus parallel zueinander sich erstreckenden linienförmigen Unterbrechungen besteht, deren Länge 5 bis 1000, insbesondere 15 bis 500, Breite 2 bis 15, insbesondere 5 bis 12, und Tiefe 3 bis 15, insbesondere 5 bis 10 Mikrometer, beträgt, wobei diese Schicht aus dem siegelfähigen Material besteht.

2. Folie nach Anspruch 1, dadurch gekennzeichnet, daß sie auf einer Oberfläche eine Schicht aus dem siegelfähigen Material mit der rauchdurchlässigen Struktur aufweist und eine Wasserdampfdurchlässigkeit von 200 bis 700, insbesondere 350 bis 500 $g/m^2.d$ (DIN 53 122) zeigt.

3. Folie nach Anspruch 1, dadurch gekennzeichnet, daß sie auf beiden Oberflächen jeweils eine Schicht aus dem

HOECHST AKTIENGESELLSCHAFT
KALLE Niederlassung der Hoechst AG

83/K 050                    - 28 -

siegelfähigen Material mit der rauchdurchlässigen Struktur aufweist und eine Wasserdampfdurchlässigkeit von 100 bis 600, insbesondere 200 bis 300 g/m$^2$.d (DIN 53 122) zeigt.

4. Folie nach einem der Ansprüche 1 bis 3, dadurch gekennzeichnet, daß die siegelfähige Oberflächenschicht jeweils ein Flächengewicht von 3 bis 15, insbesondere 8 bis 11 g/m$^2$ zeigt.

5. Schlauchhülle, insbesondere Wursthülle, mit einer längsaxialen Naht, bestehend aus einer Folie nach einem der Ansprüche 1 bis 4, die auf einer oder beiden Oberflächen die Schicht aus siegelfähigem Material mit rauchdurchlässiger Struktur aufweist.

6. Schlauchhülle nach Anspruch 5, dadurch gekennzeichnet, daß die beiden Randzonen sich gegenseitig überlappen und durch eine längsaxiale Siegelnaht miteinander verbunden sind und/oder durch einen Faden miteinander vernäht sind.

7. Schlauchhülle nach Anspruch 5 oder 6, gekennzeichnet durch wenigstens einen längsaxialen Folienstreifen auf der Innen- oder Außenseite der Schlauchhülle zur Verbindung der Randzonen.

8. Verfahren zur Herstellung der Folie nach einem der Ansprüche 1 bis 7, umfassend die folgenden Schritte

   (a) Beschichten einer Faserbahn mit Viskose

(b) Koagulieren der Viskose

(c) Regenerieren der koagulierten Viskose zu Cellulosehydrat-Gel

(d) Waschen der Folie aus Cellulosehydrat-Gel

(e) Trocknen unter Bildung der Folie aus faserverstärkter regenerierter Cellulose,

wobei man die Faserbahn zumindest während des Schrittes (b) am Schrumpfen hindert und während des Schrittes (e) in Querrichtung dehnt, dadurch gekennzeichnet, daß man nach dem Schritt (c), vorzugsweise nach dem Schritt (d), und vor dem Schritt (e) die aus Cellulosehydrat-Gel bestehende faserverstärkte Folie bis zu einem Wassergehalt von 130 bis 200, insbesondere 140 bis 180 Gew.-%, bezogen auf die Cellulose, trocknet und während dieser Teilentwässerung die Folie in Querrichtung schrumpfen läßt sowie danach die das siegelfähige Mittel enthaltende wäßrige Dispersion auf wenigstens eine Folienoberfläche aufbringt, wobei der Feststoffgehalt der Dispersion mindestens 45, vorzugsweise 45 bis 65, insbesondere 50 bis 60 Gew.-% beträgt.

9. Verfahren nach Anspruch 8, dadurch gekennzeichnet, daß die aus der Dispersion von der Folie aufgenommene Wassermenge kleiner ist als die in der vorhergehenden Trocknung von der Folie abgegebene Wassermenge.

10. Verfahren nach Anspruch 9, dadurch gekennzeichnet, daß man die von der Folie während der Beschichtung aus der Dispersion aufgenommene Wassermenge durch Variation des Feststoffgehaltes der Dispersion und/oder der Ein-

H O E C H S T   A K T I E N G E S E L L S C H A F 1
KALLE   Niederlassung der Hoechst AG

83/K 050                    - 30 -

wirkzeit der Dispersion auf die Folie einstellt.

11. Verfahren nach einem der Ansprüche 8 bis 10, gekennzeichnet durch das Aufbringen einer Haftvermittler enthaltenden Flüssigkeit auf die Folie aus Cellulosehydrat-Gel, bevor sie auf einen Wassergehalt von 130 bis 200, insbesondere 140 bis 180 Gew.-% getrocknet wird.

-----------------

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 047 390  (HOECHST)<br>* Ansprüche 1-18 * | 1 | A 22 C  13/00 |
| D,A | EP-A-0 058 240  (HOECHST)<br>* Ansprüche 1-23 * | 1 | |
| A | DE-A-2 324 065  (VEB KOMBINAT ASCOBLOC NAHRUNGSGÜTERMASCHINEN UND GASTROTECHNIK)<br>* Ansprüche 1-4; Figuren 1-3 * | 1 | |
| A | US-A-2 096 221  (R.L. ATKINSON)<br>* Anspruch * | 1 | |
| A | US-A-2 207 793  (A.J. FREEMAN)<br>* Anspruch 1 * | 1 | |

RECHERCHIERTE
SACHGEBIETE (Int. Cl.4)

A 22 C

Der vorliegende Recherchenbericht wurde für alle Patentansprüche erstellt.

| Recherchenort<br>DEN HAAG | Abschlußdatum der Recherche<br>30-11-1984 | Prüfer<br>PERMENTIER W.A. |
|---|---|---|